# EUROPÄISCHE PATENTSCHRIFT

(11) **EP 1 989 717 B1**
(45) Veröffentlichungstag und Bekanntmachung des Hinweises auf die Patenterteilung: **17.06.2009**
(21) Anmeldenummer: 07711410.6
(22) Anmeldetag: 31.01.2007
(51) Int. Cl.: H01F 27/14

(54) **VERFAHREN ZUR TROCKNUNG EINES LUFTENTFEUCHTERS**
METHOD FOR DRYING A DEHUMIDIFIER
PROCÉDÉ POUR LE SÉCHAGE D'UN DÉSHUMIDIFICATEUR D'AIR

(30) Priorität: 02.03.2006 DE 102006009668
(43) Veröffentlichungstag der Anmeldung: 12.11.2008
(73) Patentinhaber: Maschinenfabrik Reinhausen GmbH, 93059 Regensburg (DE)
(72) Erfinder: VIERECK, Karsten, 93059 Regensburg (DE); BRILL, Reiner, 63667 Nidda (DE); HAEMEL, Kai, 63637 Jossgrund (DE); LODIG, Alexander, 61239 Ober-Mörlen (DE)
(86) Internationale Anmeldenummer: PCT/EP2007/000803
(87) Internationale Veröffentlichungsnummer: WO 2007/098840

(56) Entgegenhaltungen:
- EP-A1- 1 313 112
- DD-A- 18 928
- DE-B- 1 063 703
- DE-B3- 10 357 085

## Beschreibung

Die Erfindung betrifft ein Verfahren zur Trocknung eines mit feuchtigkeitsäbsorbierendem Material gefüllten Luftentfeuchters für ölisolierte Transformatoren, Drosselspulen oder Stufenschalter.

Aus der EP 13 13 112 A1 ist ein Luftentfeuchter der eingangs genannten Art bekannt, bei dem eine elektrische Heizung zur Aufheizung und damit Austrocknung des regenerierbaren Absorptionsmittels vorgesehen ist. Damit ist es möglich, das Absorptionsmittel bei dessen Sättigung wieder zu trocknen und damit für eine erneute Flüssigkeitsaufnahme bereit zu machen. Die elektrische Heizung wird dabei durch einen im Luftentfeuchter angeordneten Feuchtigkeitssensor betätigt, wenn ein Grenzwert überschritten ist.

Aus der DE 103 57 085 B3, welche als nächstliegender Stand der Technik angesehen wird, ist weiterhin ein Verfahren zur Luftentfeuchtung mit einem solchen ausheizbaren Luftentfeuchter bekannt. Die elektrische Heizung zur Aufheizung und Austrocknung des regenerierbaren Granulates wird dabei nur dann betätigt, wenn sowohl der Feuchtigkeitssensor das Überschreiten eines Feuchtegrenzwertes signalisiert als auch zusätzlich sichergestellt ist, dass aktuell keine Luftströmung hin zum Ölausdehnungsgefäß erfolgt. Mit anderen Worten: Es wird bei diesem Verfahren die Betätigung der Heizung nur zugelassen, wenn entweder keine Luftströmung vorhanden ist oder die Luft aus dem Ölausdehnungsgefäße entweicht - auf keinen Fall jedoch während des Ansaugens von Luft in das Ölausdehnungsgefäß.

Die Erkennung dieser Zustände erfolgt bei dem bekannten Verfahren durch eine Erfassung der Luftströmung und ggf. deren Strömungsrichtung oder auch durch eine Erfassung des Differenzdruckes zwischen dem Gehäuse des Luftentfeuchters und dem Ölausdehnungsgefäß. Dazu werden Luftströmungssensoren oder auch Relativdrucksensoren verwendet.

Es hat sich in der Praxis jedoch gezeigt, dass der Luftdurchsatz im jeweiligen Ölausdehnungsgefäß relativ gering ist. Ein typischer Wert in der Praxis für Leistungstransformatoren ist 2,5 l/min, für Stufenschalter 0.5 l/min. Bei diesen geringen Luftdurchsätzen werden hohe Genauigkeitsanforderungen an die verwendeten Luftströmungs- oder auch Relativdrucksensoren gestellt; die verfügbaren Sensoren sind teuer.

Aufgabe der Erfindung ist es demnach, ein Verfahren zur Trocknung eines Luftentfeuchters anzugeben, bei dem auf derartige Sensoren verzichtet werden kann und dennoch mit einfachen technischen Mitteln sichergestellt wird, dass ein Aufheizen und damit Trocknen des Absorptionsmittels nur dann erfolgt, wenn keine Luft in das Ölausdehnungsgefäß angesaugt wird.

Diese Aufgabe wird durch ein Verfahren mit den Merkmalen des ersten Patentanspruches gelöst. Die Unteransprüche betreffen besonders vorteilhafte Ausgestaltungen einzelner Verfahrensschritte.

Dem Verfahren zur Lösung der Aufgabe liegt die allgemeine erfinderische Idee zugrunde, dass ein Leistungstransformator bei zunehmender Belastung wärmer als seine Umgebung wird und demzufolge die nach außen strömende Luft aus dem Transformator wärmer ist als die Außenluft. Daraus abgeleitet wird beim erfindungsgemäßen Verfahren durch die Ermittlung des Temperaturgradienten, d. h. des Temperaturverlaufes, der gemessenen Luft innerhalb des Systems die information abgeleitet, ob Luft von innen nach außen strömt oder nicht. Zur Durchführung des Verfahrens ist nur ein einziger Temperatursensor erforderlich, der zweckmäßigerweise im Ansaugrohr zum Ausdehnungsgefäß angeordnet ist. Ist der Temperaturgradient positiv, so strömt Luft aus dem Ausdehnungsgefäß nach außen; der Transformator "atmet aus". In einem solchen Fall, oder auch, wenn der Temperaturgradient 0 ist, also keine Luftströmung stattfindet, kann ausgeheizt werden. Anderenfalls, wenn der Temperaturgradient kleiner 0 ist, strömt Luft ins Innere des Ausdehnungsgefäßes; der Transformator "atmet ein". Bei einem solchen Zustand muss ein Ausheizen unterbleiben. Die technische Begründung dafür ist bekannt und wurde in der eingangs zitierten DE 103 57 085 B3 erläutert.

Das erfindungsgemäße Verfahren soll nachfolgend mit Hilfe der Figuren beispielhaft näher erläutert werden.

Es zeigen:
- Figur 1: das erfindungsgemäße Verfahren in der zeitlichen Reihenfolge der Verfahrensschritte
- Figur 2: eine schematische tabellarische Darstellung der Auswertung im Rahmen des erfindungsgemäßen Verfahrens.

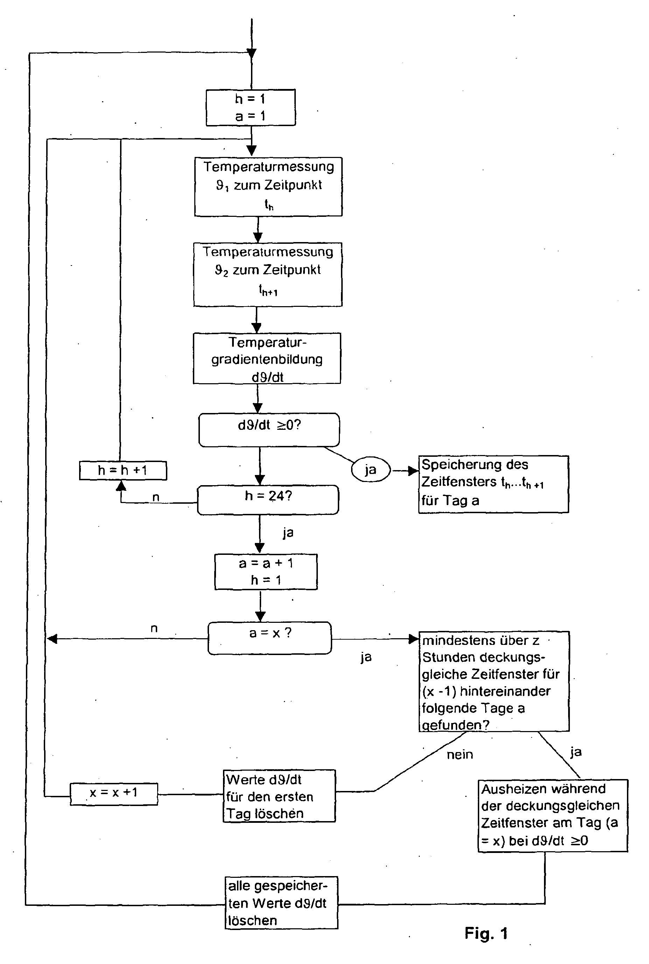

### Zur Figur 1:

Zunächst wird eine Temperatur ϑ₁, am Ansaugrohr zum Ausdehnungsgefäß des Transformators oder Stufenschalters gemessen und vorübergehend gespeichert. In der Figur 1 ist dieser Zeitpunkt der Temperaturmessung mit tₕ bezeichnet.
Nach einer gewissen Zeit, z. B. einer Stunde, wird die Temperatur am Ansaugrohr zum Ausdehnungsgefäß wiederum gemessen. In der Figur 1 ist diese Temperatur als ϑ₂ bezeichnet, der Zeitpunkt mit tₕ₊₁.
Anschließend wird die Temperatur ϑ₁, die zu Beginn der Stunde gemessen wurde, von der Temperatur ϑ₂, die am Ende der Stunde gemessen wurde, subtrahiert und das Ergebnis als Temperaturgradient dϑ/dt gespeichert.
Nachfolgend wird ermittelt, ob dϑ/dt größer oder gleich 0 ist. Ist dies der Fall, so bedeutet das, dass es im Verlauf der Stunde, an deren Anfang und Ende gemessen wurde, am Ansaugrohr wärmer geworden ist, daraus wird beim erfindungsgemäßen Verfahren abgeleitet, dass warme Luft nach außen geströmt ist und der Transformator oder Stufenschalter "ausgeatmet" hat. Ist der Temperaturgradient gleich 0, bedeutet dies, dass kein Luftaustausch stattgefunden hat. In beiden Fällen wäre ein Ausheizen des absorbierenden Materiales möglich.
Ist der Temperaturgradient dϑ/dt größer oder gleich 0, so wird dieses Zeitfenster t_{h···h+1} gespeichert. Diese Temperaturmessung und anschließende Gradientenbildung wird nachfolgend für einen ersten Zyklus ständig wiederholt. Hier soll die Erfindung am Beispiel, dass für diesen Zyklus jeweils ein vollständiger Tag a gewählt wird, erläutert werden. Die Temperaturmessung und anschließende Gradientenbildung wird nachfolgend für jede der 24 Stunden des ersten Tages a ständig wiederholt, bis alle 24 Stunden erfasst sind. Im hier erläuterten Ausführungsbeispiel entspricht ein Zeitfenster t_{h···h+1} genau einer Stunde.
Anschließend wird diese zyklische Temperaturmessung und Gradientenbildung für weitere Zeitintervalle, hier also Tage, beispielsweise drei Tage, wiederholt.
Für jeden Zyklus, hier also Tag, werden die Zeitfenster auf die beschriebene Weise gespeichert, in denen der Temperaturgradient größer oder gleich 0 ist.
An einem darauffolgenden weiteren Tag, hier also den 4. Tag, in der Figur 1 allgemein mit a =x bezeichnet, wird geprüft, ob sich während der vorangegangenen drei Tage, in der Figur 1 allgemein als (x -1) Tage bezeichnet, für jeden Tag deckungsgleiche Zeitfenster ergeben, bei denen der Temperaturgradient größer oder gleich 0 ist. Vorteilhafterweise reichen solche deckungsgleichen Zeitfenster über mindestens 4 Stunden, in der Figur 1 allgemein als z Stunden bezeichnet.
Werden solche Zeitfenster ermittelt, so beginnt am 4. Tag, allgemein am Tag a = x, das Ausheizen. Werden innerhalb dieses Zeitintervalles keine solchen deckungsgleichen Zeitfenster gefunden, so verschiebt sich die in die Vergangenheit gerichtete Betrachtung um einen Tag. Mit anderen Worten: Es werden die 24 gespeicherten Temperaturgradienten für den ersten erfassten Tag gelöscht, und die Suche nach einem weiteren gültigen Zeitfenster wird auf einen weiteren Tag ausgedehnt. Nach erfolgtem Ausheizen beginnt das Verfahren von vorn.

Zusammengefasst geht das erfindungsgemäße Verfahren im hier beschriebenen Ausführungsbeispiel also von Folgendem aus:
Über einige Tage, hier drei Tage, wird für jede Stunde der Temperaturgradient ermittelt und die Zeiträume eines positiven Temperaturgradienten - oder eines Temperaturgradienten der genau 0 ist, werden gespeichert.
Nachfolgend wird überprüft, ob sich für die einzelnen Tage deckungsgleiche Zeitfenster ergeben, d. h. ob für jeden der erfassten Tage zu immer gleichen Zeiträumen, hier über mindestens 4 Stunden, der Temperaturgradient einen Wert größer gleich 0 hat. Ist dies der Fall, wird daraus geschlossen, dass mit größter Wahrscheinlichkeit dieser Fall auch am darauffolgenden Tag eintreten wird, so dass zu diesen Zeitpunkten am darauffolgenden Tag die Kriterien für ein Ausheizen erfüllt sind. Sind keine übereinstimmenden Zeitfenster im betrachteten Zeitraum vorhanden, wird dieses Verfahren für weitere Tage fortgesetzt.

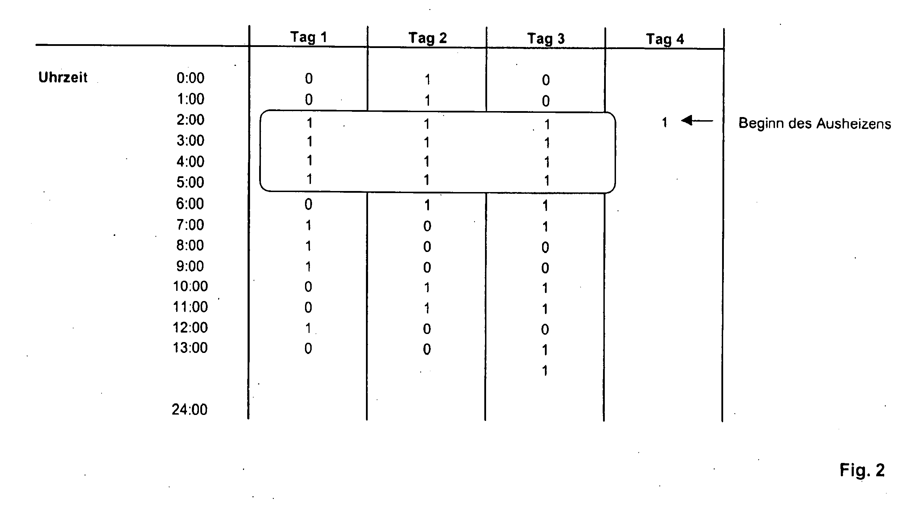

Dies ist in Figur 2 noch einmal verdeutlicht. "1" bedeutet dabei einen Temperaturgradienten größer oder gleich 0, "0" bedeutet einen negativen Temperaturgradienten.
Am Tag 1 hat die stündliche Temperaturmessung und nachfolgende Gradientenbildung z. B. einen Wert "1" in verschiedenen Zeitfenstern ergeben. Ebenso an den Folgetagen in anderen Zeitfenstern. Am vierten Tag wird ermittelt, dass sich für die drei vorausgehenden Tage übereinstimmende Zeitfenster in den Zeitbereichen 2:00 bis 3:00 Uhr, 3:00 bis 4:00 Uhr, 4:00 bis 5:00 Uhr, 5:00 bis 6:00 Uhr, vier zusammenhängende Zeitfenster also, ergeben. Dem gemäß beginnt am vierten Tag um 2:00 Uhr das Ausheizen. Anschließend kann das Verfahren wieder von vorn beginnen, wenn der Feuchtemesswert überschritten wurde oder eine Standzeit, auf die weiter unten noch eingegangen wird, abgelaufen ist.

Anzumerken ist, dass die beschriebene Ermittlung von 24 Temperaturgradienten, d. h. 24 Temperaturdifferentialen pro Tag nur ein Beispiel ist. Es ist im Rahmen der Erfindung auch möglich, andere Abstände bzw. Zeitfenster, insbesondere kleinere Schrittweiten, zur Gradientenbildung vorzusehen. Ebenso ist auch die erläuterte notwendige Mindestdauer von 4 Stunden für einen Temperaturgradienten größer gleich 0 im Rahmen der Erfindung variierbar. Schließlich kann im Rahmen der Erfindung für einen Zyklus auch ein anderer Wert als gerade ein Tag gewählt werden.

Nach einer vorteilhaften Weiterbildung der Erfindung wird zusätzlich noch eine Standzeit, die größer ist als die Zahl der betrachteten Zyklen, hier Tage x, vorgesehen, nach der auf alle Fälle und unabhängig von der Gradientenauswertung ausgeheizt wird. Durch diese Sicherheitsmaßnahme wird eine garantierte Ausheizung erreicht, auch wenn sich im Extremfall durch ungünstige Witterungsbedingungen, z. B. sehr hohe Luftfeuchtigkeit oder starke Sonneneinstrahlung, keine übereinstimmenden Zeitfenster für einen bestimmten Zeitraum finden lassen.

Dieses Verfahren ist auf besonders vorteilhafte Weise geeignet, um in Verbindung mit dem aus dem eingangs genannten Stand der Technik bekannten Feuchtesensor im Inneren des Luftentfeuchters eine zustandsorientierte Ausheizung zu realisieren. Der Feuchtesensor signalisiert in einem solchen Fall einen Grenzwert für die Feuchtigkeit, bei der das Granulat ausgeheizt werden muss; durch das erfindungsgemäße Verfahren wird dann der Ausheizvorgang bei dem nächsten gültigen Zeitfenster, das durch einen positiven Temperaturgradienten während übereinstimmender Zeitfenster der vorangehenden Zeiträume gekennzeichnet ist, eingeleitet.

## Patentansprüche

1. Verfahren zur Trocknung eines mit feuchtigkeitsabsorbierendem Material gefüllten Luftentfeuchters für ölisolierte Transformatoren, Drosselspulen oder Stufenschalter mit einem Ausdehnungsgefäß,
wobei der Luftentfeuchter über ein Ansaugrohr mit dem Ausdehnungsgefäß in Verbindung steht, wobei das feuchtigkeitsabsorbierende Material durch eine elektrische Heizung aufgeheizt und damit ausgetrocknet und regeneriert werden kann
und wobei eine Betätigung der Heizung nur dann möglich ist, wenn keine Luft ins Innere des Ausdehnungsgefäßes strömt,
**dadurch gekennzeichnet,**
**dass** ein Zyklus (a) in verschiedene Zeitfenster aufgeteilt wird,
**dass** zu einem ersten Zeitpunkt (tₕ) zu Beginn und zu einem zweiten Zeitpunkt (tₕ₊₁) jedes Zeitfensters jeweils die Temperatur (ϑ₁, ϑ₂) am Ansaugrohr gemessen und daraus nach der Beziehung ϑ₂- ϑ₁, = dϑ/dt ein Temperaturgradient (dϑ/dt) ermittelt wird,
**dass** nachfolgend diese Temperaturmessungen und Bildungen von Temperaturgradienten für identische Zeitfenster an x -1 hintereinander folgenden Zyklen (a) wiederholt werden und wobei für jeden Zyklus (a = 1, a = 2...a = x -1) diejenigen Zeitfenster gespeichert werden, an denen der Temperaturgradient (dϑ/dt) größer oder gleich 0 ist,
**dass** nachfolgend an einem weiteren Zyklus (a = x) geprüft wird, ob sich an jedem der vorangegangenen Zyklen (a = 1, a = 2,...a = x -1) mindestens z zusammenhängende, identische gespeicherte Zeitfenster ergeben, an denen der Temperaturgradient (dϑ/dt) größer oder gleich 0 ist und wobei, wenn dies der Fall ist, beim Zyklus a = x zu Beginn der übereinstimmenden Zeitfenster der Vorzyklen die elektrische Heizung in Betrieb genommen wird, sofern zu diesem Zeitpunkt der Temperaturgradient (dϑ/dt) wiederum größer oder gleich 0 ist,
oder, wenn dies nicht der Fall ist, ein weiterer Zyklus a = x +1 in den Vergleich einbezogen wird.

2. Verfahren nach Patentanspruch 1,
**dadurch gekennzeichnet,**
**dass** als Zyklus (a) jeweils ein voller, 24 Stunden umfassender Tag gewählt wird.

3. Verfahren nach Patentanspruch 1 oder 2,
**dadurch gekennzeichnet,**
**dass** der Wert für x 4 beträgt, d. h. nach der Speicherung aller Zeitfenster für drei Zyklen (a) beim darauf folgenden vierten Zyklus die Prüfung auf zusammenhängende, identische Zeitfenster erfolgt.

4. Verfahren nach einem der Ansprüche 1 oder 3,
**dadurch gekennzeichnet,**
**dass** der Wert für z 4 beträgt, d. h. mindestens vier zusammenhängende, identische Zeitfenster erforderlich sind, um die Heizung in Betrieb zu setzen.

5. Verfahren nach einem der Ansprüche 1 bis 4,
**dadurch gekennzeichnet,**
**dass** die Heizung nur dann in Betrieb gesetzt wird, wenn zusätzlich ein Feuchtesensor das Überschreiten eines Feuchtegrenzwertes im Bereich des Luftentfeuchters signalisiert.

6. Verfahren nach einem der Ansprüche 1 bis 5,
**dadurch gekennzeichnet,**
**dass** zusätzlich noch eine Standzeit, die größer ist als die Zahl x der betrachteten Zyklen vorgesehen ist, nach der auf alle Fälle und unabhängig von der Temperaturgradientenauswertung und einer Feuchtemessung ausgeheizt wird.

## Claims

1. Method for the drying of a dehydrating breather - which is filled with moisture-absorbent material - used for oil-insulated transformers, reactors or tap-changers with a conservator,
whereby the dehydrating breather is connected to the conservator by means of a suction tube,
whereby the moisture-absorbent material can be heated by means of an electric heater and can thereby be dried out and regenerated,
and whereby it is only possible for the heater to be actuated if no air is flowing into the inside of the conservator,
**characterized in that,**
a single cycle (a) is divided into different time periods,
and **in that** at a first point in time (tₙ) at the start of each time period and at a second point in time (tₙ + 1) in each time period the temperature (ϑ₁, ϑ₂) on the suction tube is measured and the temperature gradient (dϑ/dt) determined from the results on the basis of the relationship ϑ₂ - ϑ₁ = dϑ/dt,
and **in that** subsequently these temperature measurements and resultant temperature gradients are repeated for identical time periods on x - 1 sequential cycles (a),
and whereby for each cycle (a = 1, a = 2...a = x - 1) those time periods in which the temperature gradient (dϑ/dt) is greater than or equal to 0 are saved,
and **in that** subsequently a check is made on a further cycle (a = x) as to whether each of the preceding cycles (a = 1, a = 2,...a = x - 1) results in at least z correlative, identical saved time periods in which the temperature gradient (dϑ/dt) is greater than or equal to 0,
and whereby, if this is the case, for a = x the electric heater starts up at the start of the identical time periods of the preceding cycles if at this point in time the temperature gradient (dϑ/dt) is once again greater than or equal to 0,
or, if this is not the case, a further cycle a = x + 1 will be included in the comparison.

2. Method in accordance with Patent Claim 1,
**characterized in that**
a full day of 24 hours is selected for each cycle (a).

3. Method in accordance with Patent Claim 1 or 2,
**characterized in that**
the value for x is 4, i.e. after all the time periods for three cycles (a) have been saved, the check for correlative, identical time periods is carried out on the subsequent fourth cycle.

4. Method in accordance with one of Patent Claims 1 or 3,
**characterized in that**
the value for z is 4, i.e. at least four correlative, identical time periods are required in order for the heater to be started up.

5. Method in accordance with one of Patent Claims 1 to 4,
**characterized in that**
the heater is only started up if, in addition, a moisture sensor signals that a moisture level limit has been exceeded in the area of the dehydrating breather.

6. Method in accordance with one of Patent Claims 1 to 5,
**characterized in that**
provision is also made for a stand-by period as well, which is greater than the number x of cycles under consideration, after which in all events and regardless of the temperature gradient evaluation and moisture measurement, baking out follows.

## Revendications

1. Procédé de séchage d'un sécheur d'air rempli de matériau absorbant l'humidité pour transformateurs, bobines d'inductance ou changeurs de prises isolés à l'huile avec un conservateur d'huile.
Le sécheur d'air état relié au conservateur d'huile par un tube d'aspiration,
Le matériau absorbant l'humidité étant chauffé par un chauffage électrique et pouvant ainsi être asséché et régénéré
Et un actionnement du chauffage étant possible uniquement s'il ne circula pas d'air à l'intérieur du conservateur d'huile,
**caractérisé en ce que**
un cycle (a) est réparti en plusieurs fenêtres temporelles,
à un premier moment défini (tₕ) au début et à un deuxième moment défini (tₕ₊₁) de chaque fenêtre temporelle, la température (ϑ₁, ϑ₂) est respectivement lue sur le tube d'aspiration et un gradient de température (dϑ/dt) est déterminé en fonction de cela, selon la relation ϑ₂ - ϑ₁ = dϑ/dt, subséquemment ces mesures de température et formations de gradients de température sont répétées pour des fenêtres temporelles identiques sur des cycles (a) x-1 qui se suivent
et pour chaque cycle (a = 1, a = 2...a = x-1), ce sont les fenêtres temporelles sur lesquelles le gradient de température (dϑ/dt) est supérieur ou égal à 0 qui sont mémorisées,
subséquemment il est vérifié sur un cycle supplémentaire (a = x) s'il résulte sur chacun des cycles précédents (a = 1, a = 2,...a = x -1) au moins z fenêtres temporelles connexes identiques mémorisées, sur lesquelles le gradient de température (dϑ/dt) est supérieur ou égal à 0
et si ceci est le cas, le chauffage électrique étant mis en service pour le cycle a = x au début des fenêtres temporelles concordantes, à condition qu'à cet instant le gradient de température (dϑ/dt) soit à son tour supérieur ou égal à 0,
ou bien, si ceci n'est pas le cas, un cycle supplémentaire a = x +1 étant pris en compte dans la comparaison.

2. Procédé selon la revendication 1,
**caractérisé en ce que**
comme cycle (a), il est sélectionné respectivement un jour entier qui compte 24 heures.

3. Procédé selon la revendication 1 ou 2,
**caractérisé en ce que**
la valeur pour x soit 4, autrement dit après la mémorisation de toutes les fenêtres temporelles pour trois cycles (a), pour le quatrième cycle subséquent, la vérification soit effectuée sur des fenêtres temporelles connexes identiques.

4. Procédé selon l'une des revendications 1 ou 3,
**caractérisé en ce que**
la valeur pour z soit 4, autrement dit au moins quatre fenêtres temporelles connexes identiques sont
nécessaires pour mettre le chauffage en service.

5. Procédé selon l'une des revendications 1 jusqu'à 4
**caractérisé en ce que**
le chauffage est mis en service uniquement si un capteur d'humidité signale additionnellement le dépassement d'une valeur limite d'humidité dans la zone du sécheur d'air.

6. Procédé selon l'une des revendications 1 jusqu'à 5,
**caractérisé en ce que**
il est prévu additionnellement une durée d'immobilisation qui est supérieure au nombre x des cycles pris en considération, selon laquelle il est chauffé en tous les cas et indépendamment de l'analyse des gradients de température et d'une mesure de l'humidité.
